# EUROPEAN PATENT APPLICATION

(11) **EP 1 184 597 A2**
(43) Date of publication of application: **06.03.2002**
(21) Application number: 01203227.2
(22) Date of filing: 29.08.2001
(51) Int. Cl.: F16H 3/091

(54) **A biaxial type gear transmission**

(30) Priority: 29.08.2000 JP 2000258817
(71) Applicant: Aisin Seiki Kabushiki Kaisha, Kariya-shi, Aichi-ken (JP); AISIN AI Co., Ltd., Nishio-shi, Aichi-ken (JP)
(72) Inventor: Taguchi, Yoshinori, Anjo-shi, Aichi-ken (JP); Shimizu, Masaru, Toyota-shi, Aichi-ken (JP); Haneda, Yoshitomi, Anjo-shi, Aichi-ken (JP); Tozu, Kenji, Yokkaichi-shi, Mie-ken (JP); Hosoi, Yasuhiro, Gamagori-shi, Aichi-ken (JP); Miyagawa, Hiroshi, Nagoya-shi, Aichen-ken (JP); Miyazaki, Takeshige, Anjo-shi, Aichi-ken (JP); Aoyama, Yoshiyuki, Nishio-shi, Aichi-ken (JP); Itoh, Yoshiki, Nukata-gun, Aichi-ken (JP)
(74) Representative: Marshall, John Grahame

(57) **Abstract**

A biaxial type gear transmission comprises a plurality of gear sets (G1 to G5 and Gr) arranged in pairs. A sleeve (33, 34, 35) is disposed between the two gear sets (G1 and G4; G2 and G5; G3 and Gr) of each pair. Power transmission from an input shaft (31) to an output shaft (32) is established or interrupted by axial movement of the sleeves (33, 34, 35), and power transmission from the input shaft to the output shaft at a certain gear ratio is established by selection of a certain gear set based upon an operation of a shift operating mechanism. The gear sets of each pair face each other and are disposed with a nonconsecutive order of shift stage, so that shift transfers are effected by moving two of the sleeves (33, 34, 35) simultaneously.

## Description

### FIELD OF THE INVENTION

This invention generally relates to a biaxial type vehicle gear transmission. More particularly, this invention pertains to a biaxial type vehicle gear transmission that has sleeves and a plurality of a pair of shift gear sets, wherein power transmitting from an input shaft to an output shaft is established or interrupted by an axial movement of the sleeve. Further, this invention pertains to a biaxial type vehicle gear transmission that has a shift operating mechanism, wherein a certain shift gear set corresponding to an operation of the shift operating mechanism performs power transmitting.

### BACKGROUND OF THE INVENTION

A biaxial type gear transmission is disclosed in a Japanese Patent application published as Toku-Kai-Sho 58 (1983)-134256. This type of biaxial type gear transmission includes a plurality of pairs of gear sets. The plurality of gear sets form plural pairs of gear sets that respectively face each other and are disposed with a consecutive order. For example, the gear transmission disclosed in the above application employs first pair of gear sets including a gear set for a first shift stage and a shift gear set for a second shift stage. The disclosed gear transmission also employs a second pair of gear sets including a gear set for a third shift stage and a gear set for a fourth shift stage. The disclosed gear transmission is further provided with a shift operating mechanism including two electric actuators. The first of the electric actuators is activated for controlling a selecting movement of a shift rod, and the second of the electric actuators is activated for controlling a shifting movement of the shift rod.

According to the above disclosed biaxial type gear transmission, when a shift operation is performed, for example from the first shift stage to the second shift stage, a sleeve operatively disposed between the gear set for the first shift stage and the gear set for the second shift stage is shifted by the second actuator from a first shift stage position at which a power transmission path is established via the gear set for the first shift stage, to an intermediate position at which there is no power transmission path established. Following the abovedescribed movement of the sleeve from the first shift stage position to the intermediate position, the sleeve is shifted by the second actuator from the intermediate position to a second shift stage position. When the sleeve is located at the second shift stage position, the power transmission path is established via the gear set for the second shift stage.

When the shift operation from the second shift stage to the third shift stage is performed, the sleeve operatively disposed between the gear setfor the first shift stage and the gear set for the second shift stage is shifted by the second actuator from the second shift stage position to the intermediate position. Following the above-described movement of the sleeve from the second shift stage position to the intermediate position, a sleeve selecting operation is performed by the first actuator from a first-second shift select position to a third-fourth shift select position. After the sleeve selecting operation, a sleeve operatively disposed between the gear set for the third shift stage and the gear set for the fourth shift stage is shifted by the second actuator from an intermediate position to a third shift stage position. When the sleeve is located at the third shift stage position, the powertransmission path is established via the gear set for the third shift stage.

In the above described known gear transmission, each gear shift operation will take at least twice as long as the time required to shift the sleeve from an engaged gear shift stage position to an intermediate position, and at least twice as long as the time required to shift the sleeve from the intermediate position to another engaged shift stage position. That is because the above two types of sleeve movements have to be carried out sequentially. Therefore, it may not be easy to decrease the entire shifting time. Further, when the shift operation is performed while the vehicle is accelerating, the loss of transmission driving force (output) from an engine may be for a time long enough that a driver may become aware of the loss of acceleration during the gear shift operation, which makes an uncomfortable drive.
It is an object of the invention to improve known transmissions by reducing the time for a shift operation.

### SUMMARY OF THE INVENTION

The invention provides a biaxial type gear transmission including a plurality of pairs of gear sets for establishing or interrupting power transmission from an input shaft to an output shaft by an axial movement of any of a corresponding plurality of sleeves respectively disposed between the gear sets of each pair, wherein power transmission from the input shaft to the output shaft in any selected shift stage is established by via a certain gear set by operation of a shift operatingmechanism controlling axial movement of the sleeves, characterized in that the gear sets of each pair of gear sets have a non-consecutive order of shift stage.

When the gear shifting operation is performed from a first shift stage to a second shift stage, the sleeve operatively disposed between the gear set for the first shift stage and the gear set for another shift stage (not the second shift stage) is shifted from a first shift stage position to an intermediate position. At the same time, the sleeve operatively disposed between the gear set for the second shift stage and the gear set for another shift stage (not the third shift stage) is shifted from an intermediate position to a second shift stage position. Accordingly, the gear shifting operation from the first shift stage to the second shift stage is completed.

When the gear shifting operation from the second shift stage to the third shift stage is performed, the sleeve operatively disposed between the gear set for the second shift stage and the shift gear set for another shift stage (not the third shift stage) is shifted from the second shift stage position to the intermediate position. At the same time, the sleeve operatively disposed between the gear set for the third shift stage and another gear set (not the fourth shift stage) is shifted from an intermediate position to a third shift stage position. Accordingly, the gear shifting operation from the second shift stage to the third shift stage is completed.

In this way, this transmission is possible to shift the transmission by movement of two sleeves at the same time. Accordingly, it is possible to decrease the entire shifting time. Furthermore, when gear shifting during vehicle acceleration, a driver may have a good driving feeling in response to an acceleration pedal operation and can drive comfortably.

### BRIEF DESCRIPTION OF THE DRAWING FIGURES

An embodiment of the invention is illustrated in the accompanying drawings, in which:
Fig. 1 is a schematic block view illustrating a vehicle driving mechanism employing a biaxial type gear transmission according to the invention ;
Fig. 2 is a schematic view illustrating the biaxial type gear transmission shown in Fig. 1 ; and
Fig. 3 is a drawing illustrating a shift pattern of a shift lever operating the biaxial type gear transmission shown in Fig. 2.

### DETAILED DESCRIPTION OF THE INVENTION

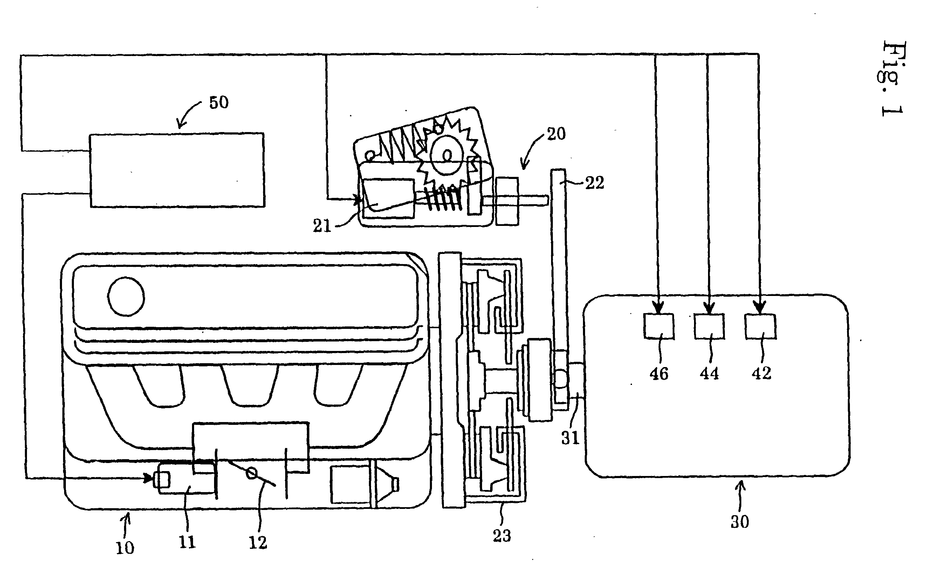

Fig. 1 schematically illustrates a driving mechanism of a vehicle. The driving mechanism includes an engine 10, an automatic clutch 20 and a transmission 30. The transmission 30 is connected to the engine 10 via the automatic clutch 20. The engine 10 is provided with a throttle valve 12 controlled by an electric actuator 11 for activating the engine 10. The operation of the electric actuator 11 is controlled by an electric controller 50 so as to control outputted force from the engine 10.

The automatic clutch 20 is provided with a clutch lever 22 moved by an electric actuator 21. Operation of the electric actuator 21 is controlled by the electric controller 50 so as to control the movement of the clutch lever 22. Accordingly, a switching operation of a friction clutch 23 (a mechanical dry type- single disc clutch) is controlled so that power transmitting from the engine 10 is established or interrupted.

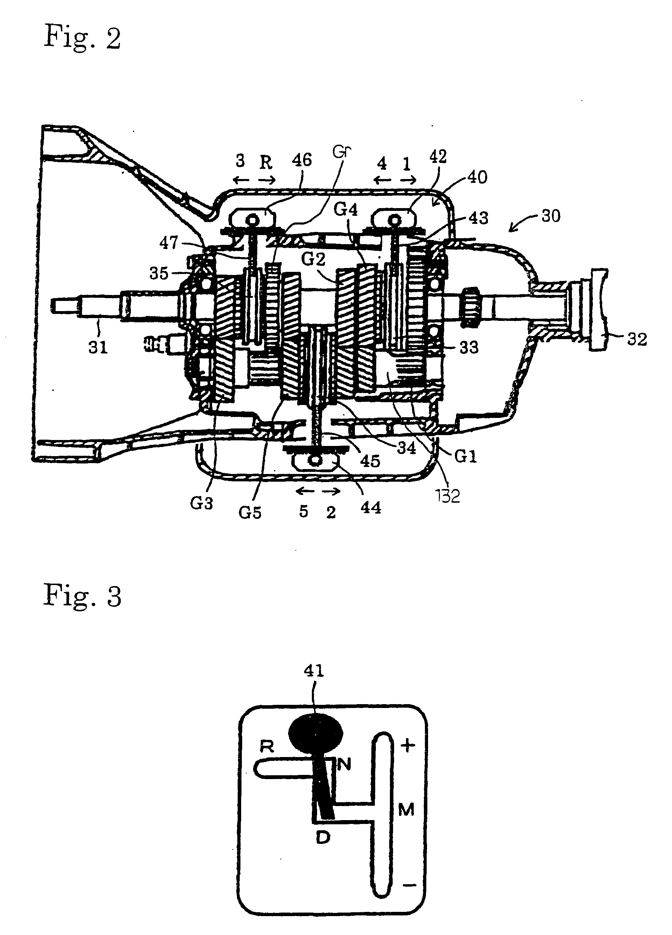

As shown in Fig. 1 and Fig. 2, the transmission 30 includes an input shaft 31, an output shaft 32, a counter shaft 132, three pairs of gear sets (G4 and G1,G5 and G2 ,G3 and Gr), and three sleeves 33, 34, 35 respectively disposed between the gear sets of each of the three pairs. The input shaft 31 and the output shaft 32 are disposed parallel to the counter shaft 132. The three pairs of gear sets G1 through G5 and Gr are configured with a total of six gear ratios. The transmission 30 is a biaxial type gear transmission which is applicable for five forward shift stages and a single rearward shift stage. An output portion (a clutch disc) of the friction clutch 23 is connected to the input shaft 31 for transmitting driving force from the engine 10. The driving force is transmitted to an axle shaft (not shown) via the output shaft 32. Each sleeve 33, 34, and 35 is axially moved corresponding to an actuation of a shift operating mechanism 40, enabling the driving force to be transmitted via any of the six gear sets.

One of the pairs of gear sets, illustrated at the right side of Fig. 2, comprises a gear set G1 for a first shift stage and a gear set G4 for a fourth shift stage. The gear sets G1 and G4 face each other and the first sleeve 33 is disposed therebetween. A second pair of gear sets, illustrated at the middle of Fig. 2, comprises gear set G2 for a second shift stage and a gear set G5 for a fifth shift stage. The gear sets G2 and G5 face each other and the second sleeve 34 is disposed therebetween. The third pair of gear sets, illustrated at the left side of Fig. 2, comprises gear set G3 for a third shift stage and a gear set Gr for a reverse shift stage. The gear sets G3 and Gr face each other and the third sleeve 35 is disposed therebetween.

The shift operating mechanism 40 is provided with a shift lever 41 operated based on a shift pattern shown in Fig. 3. The shift operating mechanism 40 further includes an electric actuator 42 for axially moving the first sleeve 33,a shift fork 43, an electric actuator 44 for axially moving the second sleeve 34, a shift fork 45, an electric actuator 46 for axially moving the third sleeve 35, and a shift fork 47. Operation of the respective electric actuators 42, 44, and 46 is controlled by the electric controller 50. Each of the respective electric actuators 42, 44, and 46 comprises an electric motor with speed reduction gears, a pinion gear rotatably activated by the electric motor, and a gear rack engaged with the pinion gear and slidable to effect movement of the respective shift fork 43, 45 or 47.

The electric controller 50 controls the operation of each electric actuator 11, 21, 42, 44, and 46 on the basis of detected signals by sensors (not shown) for detecting a condition of the engine 10 and different elements of the vehicle. For example, the respective sensors detect a position of each electric actuator 11, 21, 42, 44 and 46 and the shift lever 41. When the shift lever 41 is maintained at a position N (neutral) shown in Fig. 3, the electric actuators 42, 44 and 46 are controlled by the electric controller 50 to set all three sleeves 33, 34, and 45 at an intermediate position, wherein power transmitting from the input shaft 31 to the output shaft 32 is not performed. Further, the automatic clutch 20 is engaged under the control of the electric actuator 21, so that power is transmitted to the input shaft 31.

When the shift lever 41 is shifted from the position N to a position R (reverse), the automatic clutch 20 is first disengaged, interrupting power transmission from the engine 10 to the input shaft 31. The third sleeve 35 is shifted to a reverse shift stage position from the intermediate position, wherein power transmission from the input shaft 31 to the output shaft 32 is established via the reverse gear set Gr. The electric actuator 21 then re-engages the automatic clutch 20, wherein power transmission from the engine 10 to the output shaft 32 is established via the reverse gear set Gr. All actuator movements are under the control of the electric controller 50.

When the shift lever 41 is shifted from the position R to the position N, the third sleeve 35 is returned to the intermediate position in the same manner as described.

When the shift lever 41 is shifted from the position N to a position D (drive) shown in Fig. 3, the automatic clutch 20 is first disengaged. The first sleeve 33 is shifted to the first shift stage position, wherein power transmission from the input shaft 31 to the output shaft 32 is established by the gear set G1 for the first shift stage. The electric actuator 21 then re-engages the automatic clutch 20, establishing power transmission from the engine 10 to the output shaft 32 via the first gear set G1. All actuator movements are under the control of the electric controller 50. When the vehicle is running with the shift lever 41 in the position D as shown in Fig. 3, the electric controller 50 repeatedly controls operation of the electric actuators 11, 21, 42, 44, and 46 to select diffeent gear ratios corresponding to the vehicle driving condition, for example, a vehicle driving speed or an opening degree of the throttle valve12, so that the transmission 30 is employed as an automatic transmission.

When the shift lever 41 is shifted from the position D to the position N shown in Fig. 3, any of the sleeves 33, 34, and 35 which had been set at a shift stage position is returned to the intermediate position.

When the shift lever 41 is shifted from the position D to a position M (manua) shown in Fig. 3, the above automatic shift operation for controlling the respective electric actuators 11, 21, 42, 44, and 46 in response to the vehicle driving condition is switched to a manual shift operation for controlling the respective electric actuators 11, 21, 42, 44, and 46 in response to a shifting operation of the shift lever 41 by the driver, wherein the transmission 30 is employed as a manual transmission.

When the shift lever 41 is shifted from the position M to the position D shown inFig. 3, control of the operation of the respective electric actuators 11, 21, 42, and 44 is returned to automatic mode, in response to the vehicle running condition.

With the shift lever 41 set in the position M, a shift-up operation is performed every time the shift lever 41 is shifted from the position M to a positive (+) position, and a shift-down operation is performed every time the shift lever 41 is shifted from the position M to a negative (-) position. When the driver releases the shift lever 41 after it has been shifted from the position M to the positive (+) position or to the negative (-) position, the shift lever 41 is automatically returned to the position M.

When the shift-up operation is performed, the automatic clutch 20 is first disengaged while the throttle valve 12 is closed, and the shift operation to a higher shift stage is performed. The electric controller 50 controls the operation of the respective electric actuators 11, 21, 42, 44, and 46, and finally the automatic clutch 20 is engaged and the throttle valve 12 of the engine 10 is opened.

When the shift-up operation is performed from the first shift stage to the second shift stage, the first sleeve 33 operatively disposed between the gear set G1 and the gear set G4 is shifted from the first shift stage position to the intermediate position by the electric actuator 42. At the same time, the second sleeve 34 operatively disposed between the gear set G2 and the gear set G5 is shifted from the intermediate position to a second speed shift position by the electric actuator 44, wherein power transmission from the input shaft 31 to the output shaft 32 is established via the gear set G2. Accordingly, the shift operation from the first gear ratio to the second gear ratio is completed.

When the shift-up operation is performed from the second shift stage to the third shift stage, the second sleeve 34 operatively disposed between the gear set G2 and the gear set G5 is shifted from the second shift stage position to the intermediate position by the electric actuator 44. At the same time, the third sleeve 35 operatively disposed between the gear set G3 and the gear set Gr is shifted from the intermediate position to a third shift stage position by the electric actuator 46, wherein powertransmission from the input shaft 31 to the output shaft 32 is established via the gear set G3. Accordingly, the shift operation from the second gear ratio to the third gear ratio is completed.

When the shift-up operation is performed from the third shift stage to the fourth shift stage, the third sleeve 35 operatively disposed between the gear set G3 and the gear set Gr is shifted from the third shift stage position to the intermediate position by the electric actuator 46. At the same time, the first sleeve 33 operatively disposed between the gear set G1 and the gear set G4 is shifted from the intermediate position to the fourth shift stage position by the electric actuator 42, wherein power transmission from the input shaft 31 to the output shaft 32is established by the gear set G4. Accordingly, the shift operation from the third gear ratio to the fourth gear ratio is completed.

When the shift-up operation is performed from the fourth shift stage to the fifth shift stage, the first sleeve 33 operatively disposed between the gear set G1 and the gear set G4 is shifted from the fourth shift stage position to the intermediate position by the electric actuator 42. At the same time, the second sleeve 34 operatively disposed between the gear set G2 andthe gear set G5 is shifted from the intermediate position to the fifth shift stage position by the electric actuator 44, wherein power transmission from the input shaft 31 to the output shaft 32 is established by the gear set G5. Accordingly, the shift operation from the fourth gear ratio to the fifth gear ratio is completed.

When the shift-down operation is performed, the automatic clutch 20 is first disengaged while the throttle valve 12 is closed, and the shift operation to a lower shift stage is performed. The electric controller 50 controls the operation of the respective electric actuators 11, 21, 42, 44, and 46, and finally the automatic clutch 20 is engaged and the throttle valve 12 of the engine 10 is opened.

When the shift-down operation is performed from the fifth shift stage to the fourth shift stage, the second sleeve 34 operatively disposed between the gear set G2 and the gear set G5 is shifted from the fifth shift stage position to the intermediate position by the electric actuator 44. At the same time, the first sleeve 33 operatively disposed between the gear set G1 and the gear set G4 is shifted from the intermediate position to the fourth shift stage position by the electric motor 42. Accordingly, the shift operation from the fifth shift stage to the fourth shift stage is completed.

When the shift-down operation is performed from the fourth shift stage to the third shift stage, the first sleeve 33 operatively disposed between the gear set G1 and the gear set G4 is shifted from the fourth shift stage position to the intermediate position by the electric actuator 42. At the same time, the third sleeve 35 operatively disposed between the gear set G3 and the gear set Gr is shifted from the intermediate position to the third shift stage position by the electric motor 46. Accordingly, the shift operation from the fourth shift stage to the third shift stage is completed.

When the shift-down operation is performed from the third shift stage to the second shift stage, the third sleeve 35 operatively disposed between the gear set G3 and the gear set Gr is shifted from the third shift stage position to the intermediate position by the electric actuator 46. At the same time, the second sleeve 34 operatively disposed between the gear setG2 and the gear set G5 is shifted from the intermediate position to the second shift stage position by the electric actuator 44. Accordingly, the shift operation from the third shift stage to the second shift stage is completed.

When the shift-down operation is performed from the second shift stage to the first shift stage, the second sleeve 34 operatively disposed between the gear set G2 and the gear set G5 is shifted from the second shift stage position to the intermediate position by the electric actuator 44. At the same time, the first sleeve 33 operatively disposed between the gear set G1 and the gear set G4 is shifted from the intermediate position to the first shift stage position by the electric actuator 42. Accordingly, the shift operation from the second shift stage to the first shift stage is completed.

In the illustrated embodiment of this invention, a skipping shiftup operation can be performed by moving the shift lever 41 from the position M to the positive (+) position twice within a short period of time. For example, the skipping shift-up operation may be a shift operation from the first shift stage to the third shift stage. Similarly a skipping shift-down operation may be performed by moving the shift lever 41 from the position M to the negative (-) position twice within a short period of time. For example, the skipping shift-down operation may be a shift operation from the fifth shift stage to the third shift stage.

Upon the skipping shift-up operation, when the shift operation is performed from the first shift stage to the third shift stage, the first sleeve 33 operatively disposed between the gear set G1 and the gear set G4 is shifted from the first shift stage position to the intermediate position by the electric actuator 42. At the same time, the third sleeve 35 operatively disposed between the gear set G3 and the gear set Gr is shifted from the intermediate position to the third shift stage position by the electric actuator 46. Accordingly, the shift operation from the first shift stage to the third shift stage is completed.

Upon the skipping shift-down operation, when the shift operation is performed from the fifth shift stage to the third shift stage, the second sleeve 34 operatively disposed between the gear set G2 and the gear set G5 is shifted from the fifth shift stage position to the intermediate position by the electric actuator 44. At the same time, the third sleeve 35 operatively disposed between the gear set G3 and the gear set Gr is shifted from the intermediate position to the third shift stage position by the electric actuator 46. Accordingly, the shift operation from the fifth shift stage to the third shift stage is completed.

As described above, all gear shift operations are performed by shifting two of the sleeves 33, 34 and 35 by the corresponding two of the electric actuators 42, 44, and 46 at the same time. Therefore, the shifting time can be reduced. For example, when the vehicle is accelerating and a gear shift operation is performed, the period of time during which the automatic clutch 20 is disengaged is reduced. This increases the time that the driving force (output) from the engine 10 is transmitted to the vehicle wheels, and the driving performance and the 'feel' of the transmission to the driver is improved.

The above-described embodiment of the present invention employs the gear transmission 30 provided with three pairs of gear sets (including six gear sets G1 through G5 and Gr) and three sleeves 33, 34, and 35. As described, this provides a gear transmission 30 with five forward shift stages and a single rearward speed shift. However, the invention is also applicable to transmissions with four forward speed shifts and a single rearward speed shift. In this case, the shift gear set for the first shift stage faces the gear set for the third shift stage, and the gear set for the second shift stage faces the gear set for the fourth shift stage. The gear set for the reverse shift stage is disposed independently. The invention is further applicable to transmissions having three forward shift stages and a single rearward speed shift. In this case, the gear set for the first shift stage faces the gear set for the third shift stage, and the gear set for the second shift stage faces the gear set for the reverse shift stage.

## Claims

1. A biaxial type gear transmission including a plurality of pairs of gear sets (G1 through G5 and Gr) for establishing or interrupting power transmission from an input shaft to an output shaft by an axial movement of any of a corresponding plurality of sleeves (33, 34, 35) respectively disposed between the gear sets of each pair, wherein power transmission from the input shaft to the output shaft in any selected shift stage is established via a certain gear set by operation of a shift operating mechanism controlling axial movement of the sleeves (33, 34, 35),
**characterized in that** the gear sets of each pair of gear sets have a non-consecutive order of shift stage.

2. A biaxial type gear transmission according to claim 1, wherein the shift operating mechanism includes electric actuators (42, 44, 46) for each sleeve, and each sleeve is shifted by a different electric actuator.

3. A biaxial type gear transmission according to claim 1 or claim 2, wherein the electric actuators (42, 44 and 46) for the sleeves are controlled by a controller (50) which is effective to actuate the actuators two at a time to move their associated sleeves simultaneously.

4. A biaxial type gear transmission according to any of claims 1 to 3 for a motor vehicle, wherein the input shaft (31) is provided for transmitting driving force from an engine (10) of the vehicle, the output shaft (32) is provided for transmitting the driving force to driving wheels of the vehicle, a counter shaft (132) is disposed parallel to the input shaft and the output shaft, a shift fork (43, 45, 47) is connected to each electric actuator for shifting the corresponding sleeve, and an electric controller (50) is provided for controlling the electric actuators automatically based upon a vehicle driving condition.

5. A biaxial type gear transmission according to any of claims 1 to 3 for a motor vehicle, wherein the input shaft (31) is provided for transmitting driving force from an engine (10) of the vehicle, the output shaft (32) is provided for transmitting the driving force to driving wheels of the vehicle, a counter shaft (132) is disposed parallel to the input shaft and the output shaft, a shift fork (43, 45, 47) is connected to each electric actuator for shifting the corresponding sleeve, and an electric controller (50) is provided for controlling the electric actuators based upon a manual operation of a shift lever by a driver.

6. A biaxial type gear transmission according to claim 4 or claim 5, wherein the input shaft is connected to the engine via an automatic clutch (20).

7. A biaxial type gear transmission according to any preceding claim, wherein one of the plural pairs of gear sets comprises a first gear set (G1) for establishing a first shift stage and a fourth gear set (G4) for establishing a fourth shift stage.

8. A biaxial type gear transmission according to any preceding claim, wherein one of the plural pairs of gear sets comprises a second gear set (G2) for establishing a second shift stage and a fifth gear set (G5) for establishing a fifth shift stage.

9. A biaxial type gear transmission according to any preceding claim, wherein one of the plural pairs of gear sets comprises a third gear set (G3) for establishing a third shift stage and the rearward gear set (Gr) for establishing a rearward shift stage.

10. A biaxial type gear transmission according to any of claims 1 to 6, wherein there are six gear sets comprising five forward gear sets (G1 to G5) and one reverse gear set (Gr) arranged in three pairs, of which a first pair comprises the first gear set (G1) and the fourth gear set (G4), a second pair comprises the second gear set (G2) and the fifth shift gear set (G5), and a third pair comprises the third gear set (G3) and the reverse gear set (Gr).

11. A biaxial type gear transmission according to any of claims 1 to 6, wherein there are five gear sets comprising four forward gear sets (G1 to G4) and one reverse gear set (Gr) arranged in two pairs and one single gear set, of which a first of the pairs comprises the first gear set (G1) and the third gear set (G3), a second of the pairs comprises the second gear set (G2) and the fourth shift gear set (G4), and the single gear set comprises the reverse gear set (Gr).

12. A biaxial type gear transmission according to any of claims 1 to 6, wherein there are four gear sets comprising three forward gear sets (G1 to G3) and one reverse gear set (Gr) arranged in two pairs, of which a first pair comprises the first gear set (G1) and the third gear set (G4), a second pair comprises the second gear set (G2) and the reverse gear set (Gr).
